# EUROPEAN PATENT APPLICATION

(11) **EP 0 847 014 A1**
(43) Date of publication of application: **10.06.1998**
(21) Application number: 97402902.7
(22) Date of filing: 02.12.1997
(51) Int. Cl.: G06F 17/10

(54) **Method for processing a digital signal**

(30) Priority: 05.12.1996 FR 9614926
(71) Applicant: THOMSON multimedia, 92648 Boulogne Cédex (FR)
(72) Inventor: Figari, Xavier, 92648 Boulogne Cedex (FR); Gentit, Jean-Marc, 92648 Boulogne Cedex (FR); Boehm, Johannes, 92648 Boulogne Cedex (FR)
(74) Representative: Ruellan-Lemonnier, Brigitte

(57) **Abstract**

The present invention relates to a method for processing an audio signal represented, in the frequency domain, by a number N of samples previously decompressed and stored in a memory area in a given order, the said method including a first phase for calculating a number N of samples representing the said signal in the time domain from the samples representing this signal in the frequency domain, a second phase which involves mixing the calculated temporal samples and is intended for fixing the number of broadcasting channels for the processed signal, and a third phase of correcting distortions liable to impair the processed signal.

According to the invention, for each broadcasting channel, the same memory area is used during the first phase and the third phase, to perform the calculation and storage of the calculated temporal samples.

## Description

The present invention relates to a method for processing an audio signal represented, in the frequency domain, by a number N of samples previously decompressed and stored in a memory area in a given order, the said method including a first phase for calculating a number N of samples representing the said signal in the time domain from the samples representing this signal in the frequency domain, a second phase which involves mixing the calculated temporal samples and is intended for fixing the number of broadcasting channels for the processed signal, and a third phase of correcting distortions liable to impair the processed signal.

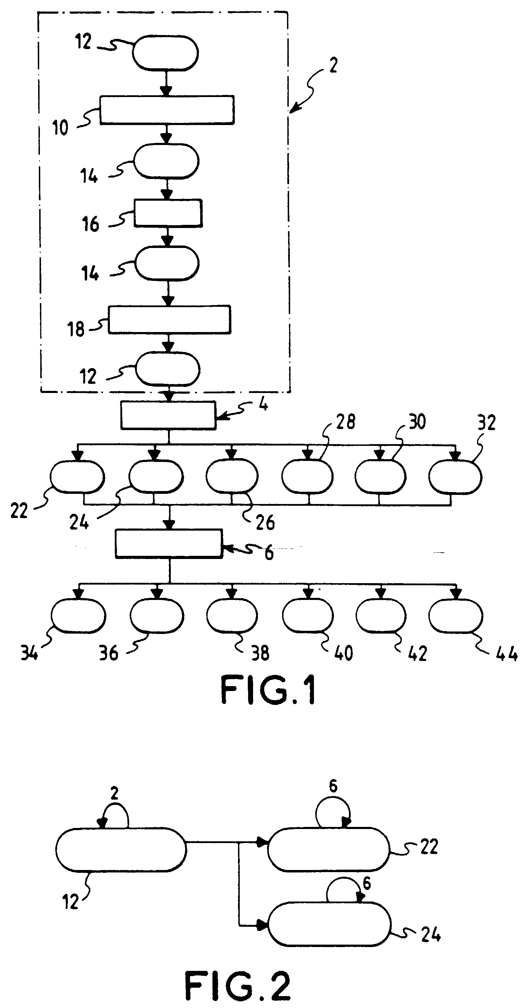

Figure 1 represents a flowchart illustrating a known method for processing an audio signal conveying sound information output by five distinct sound sources. This method includes three successive phases, i.e. a first phase 2, a second phase 4 and a third phase 6.

The first phase 2 includes:
- a step 10 of pre-multiplication, by cos/sin coefficients, of 256 frequency coefficients of 24 bits, previously decompressed and stored in a memory area 12, each of the frequency samples corresponding to a given frequency conveyed by the processed signal;
- a step of storing the digital samples obtained by the pre-multiplication step 10 in a second memory area 14;
- a step of calculating 16 an IFFT (Inverse Fast Fourier Transform) from the samples stored in the second memory area 14;
- a step of transferring the temporal samples resulting from the step of calculating 16 the IFFT into the second memory area 14;
- a step of post-multiplication 18 of the temporal samples by cos/sin coefficients;
- a step of transferring the result of the post-multiplication 18 to the first memory area 12.

The second phase 4 consists of:
- a step of mixing the temporal samples which are obtained by the post-multiplication 18 and which are stored in the first memory area 12; followed by a step of storing the said mixed samples, in a predefined order, in a plurality of memory areas 22, 24, 26, 28, 30, 32 each assigned to a broadcasting channel.

Phase 6 consists of a temporal filtering (windowing) of the mixed samples stored in the memory areas 22, 24, 26, 28, 30, 32 before despatching them to output registers 34, 36, 38, 40, 42 and 44.

As may be seen in Figure 1, with the exception of the calculation of the IFFT, steps 10 and 18 of phase 2, as well as phases 4 and 6, require a transfer of the processed data between two distinct memory areas. Thus, during each of the said steps, the coefficients are read from a first memory area, in a specified order, and are stored in the second memory area in an order corresponding to linearly increasing frequency values (or time values). Consequently, each channel used for broadcasting the processed signal needs two memory areas for the calculation operations and one memory area for storage of the coefficients after mixing.

By way of example, to use two broadcasting channels it is necessary to use four distinct memory areas, i.e. two work memory areas and two storage memory areas. Assuming that the coefficients are made up of 24 bits, the total memory size required is 4×256×24 bits.

Likewise, to use six broadcasting channels it is necessary to use eight different memory areas, i.e. two work memory areas and six storage memory areas for the coefficients after mixing. The total memory size required is then 8×256×24 bits.

The object of the invention is to reduce the number of memory areas needed for processing the signal after decompression.

To this end, for each broadcasting channel, the same memory area is used during the first phase and the third phase of the method according to the invention, to perform the calculation and storage of the calculated temporal samples.

This results in an appreciable saving in the memory space needed for processing the signal and hence a reduction in the cost and dimensions of the components used to carry out such processing.

Other characteristics and advantages of the invention will emerge from the description which follows, given by way of non-limiting example, with reference to the appended figures in which:
- Figure 1 represents a general diagram of a known method of processing an audio signal, as used in the Dolby AC3 standard;
- Figure 2 represents diagrammatically a processing method in accordance with the invention in a first example application in which two broadcasting channels are used;
- Figure 3 illustrates the example application of Figure 2 through a flowchart;
- Figure 4 illustrates diagrammatically a processing method in accordance with the invention in a second example application in which two broadcasting channels are used;
- Figure 5 illustrates the example application of Figure 4 through a flowchart.

The calculation steps as well as the memory areas which accomplish the same functions in the various figures are represented by the same references.

Figure 1 illustrates diagrammatically a method for processing an audio signal represented, in the frequency domain, by a number N of samples previously decompressed and stored in a memory area 12 in a given order. This method is incorporated into a general process for audio data decompression and includes a first phase 2 for calculating a number N of samples representing the said signal in the time domain from the samples representing this signal in the frequency domain, a second phase 4 which involves mixing the calculated temporal samples and is intended for fixing the number of broadcasting channels for the processed signal and a third phase 6 of correcting distortions liable to impair the processed signal.

According to a first important characteristic of the signal processing method in accordance with the invention, for each broadcasting channel, the same memor.y area is used during the first phase 2 and the third phase 6, to perform the calculation and storage of the calculated temporal samples.

The said first phase 2 is carried out via an Inverse Modified Discrete Cosine Transform (IMDCT) whilst the third phase 6 is carried out via a temporal windowing applied to each broadcasting channel.

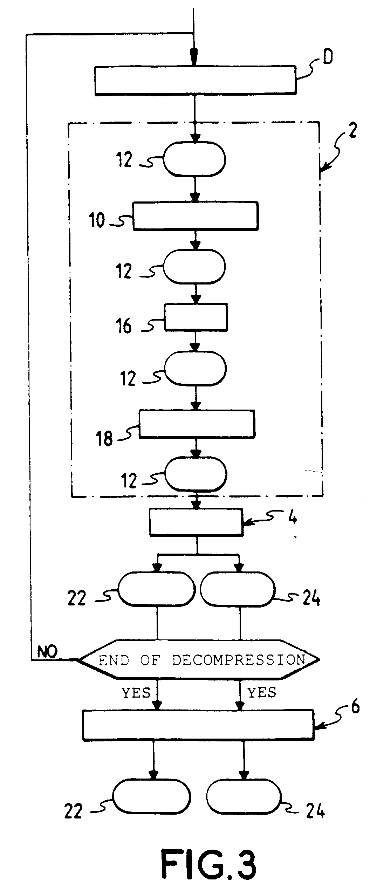

Represented schematically in Figure 2 is a diagram illustrating the successive steps of the method according to the invention by arrows starting at the input memory areas from which the samples are extracted and ending at output memory areas, to which these samples are transferred after each step of the processing. The calculation phase carried out is indicated by its reference marked above each arrow. As may be seen in Figure 2, the input and output memory areas used in the calculation steps performed during the first phase 2 and the third phase 6 are identical. This is also illustrated by the flowchart of Figure 3 which furthermore represents a step D preceding phase 2 of the processing method according to the invention and which corresponds to storage of the digital data conveyed via each of the two broadcasting channels after their decompression.

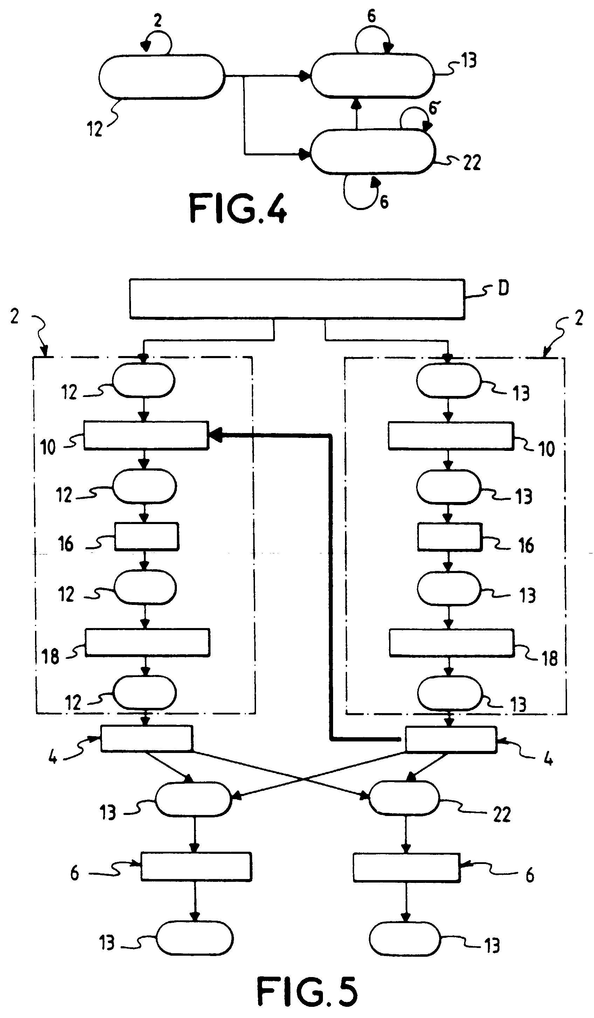

Figure 4 illustrates an example application of the processing method according to the invention in which a stereo signal is processed. In this case, as is known, instead of individually transmitting the two signals delivered by the two sound sources, the sum and the difference of these signals are transmitted. As in Figure 2, the successive steps are represented by arrows starting at the input memory areas from which the samples are extracted and ending at output memory areas to which the samples are transferred after each step of the processing. In this case the two audio signals processed are decompressed successively and stored respectively in a memory area 12 and a memory area 13 before the calculation of the IFFT. Initially, only one memory area is available. The mixing operation includes two variants:
- mixing to obtain a stereo effect, represented in Figure 4 by the arrow 6', and consisting in copying, after step 4, the samples stored in a given memory area to this same memory area;
- mixing to obtain a mono effect, represented by the arrow 6, consisting in storing, after step 4, the samples corresponding to the two broadcasting channels in the same memory area (12 or 13). In the example illustrated in Figure 4, the mixing is performed in memory area 12. A mono effect is obtained by copying the contents of the memory area 22 into the memory area 13, after windowing and before transferring the samples to the output registers.

In this case, as may be seen in Figure 5 which also shows a step D preceding phase 2 of the processing method according to the invention and which corresponds to the storage of the digital data conveyed, via each of the two broadcasting channels after their decompression, use is made, during phase 2, respectively for the first and for the second channel, of a memory area 12 and a memory area 13. Likewise, during phase 6, the same memory area 13 is used for one of the channels and a memory area 22 is used for the other channel. The total number of memory areas used for each channel is still three.

Moreover, in the case in which the two signals are strongly correlated, this allows a sizeable reduction in the number of bits needed for coding the channel dedicated to the broadcasting of the difference between the signals output by the two sources. In this case, the two channels are reconstructed in two distinct memory areas before beginning the IMDCT.

With such a method, the memory size saved is equal to 16% of the memory size used in the prior art method described earlier.

The method according to the invention also makes it possible to process a signal conveying audio information output successively by at least five distinct sound sources, and transmitted after the mixing operation 4 via at least one broadcasting channel. In this case, during the phase 4 for mixing the information output by the various sources, the samples are ordered in a memory area according to a first order such that, during the temporal windowing step 6 applied to the said memory area, the samples are retrieved in a linearly increasing temporal order.

The processing method according to the invention enables an appreciable time saving to be made compared with the prior art method described. This constitutes a substantial advantage, particularly in a system in which the calculation time is favoured over the memory size used.

## Claims

1. Method for processing a signal represented by digital data previously decompressed and stored in a memory area in a given order, the said method including a first phase (2) for calculating a number N of samples representing the said signal in the time domain from a number N of samples representing this signal in the frequency domain, a second phase (4) which involves mixing the successively calculated temporal samples and is intended for choosing the number of broadcasting channels for the processed signal, and a third phase (6) of correcting distortions liable to impair the processed signal, wherein for each broadcasting channel, the same memory area is used during the first phase (2) and the third phase (6), to perform the calculation and storage of the said temporal samples.

2. Method according to Claim 1 wherein the said first phase (2) is carried out via an inverse modified cosine transform.

3. Method according to Claim 1, wherein the third phase (6) is carried out via a temporal windowing applied to each broadcasting channel.

4. Method according to one of Claims 1 to 3, wherein the said processed signal conveys audio information output successively by at least five distinct sound sources and transmitted after the mixing operation via at least one broadcasting channel.

5. Method according to one of the preceding claims, wherein, during the mixing phase (4), the samples are ordered in a memory area in such a way that, during the temporal windowing step (6) applied to the said memory area, the samples are retrieved in a linearly increasing temporal order.
